# FASCICULE DE BREVET EUROPEEN

(11) **EP 0 562 991 B1**
(45) Date de publication et mention de la délivrance du brevet: **20.09.1995**
(21) Numéro de dépôt: 93460008.1
(22) Date de dépôt: 17.02.1993
(51) Int. Cl.: A01K 1/02, A01K 1/06, A61D 3/00

(54) **Système de fermeture de cases pour animaux notamment des porcs**
Verschlussanordnung für Tierkäfig, insbesondere für Schweine
Closure system for animal cages, especially for pigs

(30) Priorité: 23.03.1992 FR 9203920
(43) Date de publication de la demande: 29.09.1993
(73) Titulaire: GALVELPOR SA, F-29800 Landerneau (FR)
(72) Inventeur: Lagadec, Jean, F-29219 Le Relecq-Kerhuon (FR)
(74) Mandataire: Le Guen, Louis François

(56) Documents cités:
- EP-A- 0 350 335
- FR-A- 2 096 118
- FR-A- 2 166 806
- FR-A- 2 505 136
- US-A- 1 421 798
- US-A- 3 691 998
- US-A- 4 026 069
- US-A- 4 201 157

## Description

La présente invention concerne une case pour animaux, notamment des porcs, comportant un système de fermeture.

On connaît une telle case par le document FR-A-2 506 136 qui montre, une case réfectoire qui comprend des barrières formant clôture et une ouverture, ladite case étant pourvue d'un système de fermeture automatique constitué de deux battants pouvant pivoter respectivement autour d'axes verticaux de manière à pouvoir prendre, d'une part, une position d'ouverture et, d'autre part, une position de fermeture où ils se trouvent dans le plan de l'ouverture pour l'obstruer.

L'inconvénient majeur d'une telle case réside dans le fait que les barrières entourant l'animal ainsi que le système de fermeture rendent l'espace de l'animal dans la case inviolable, empêchant l'éleveur lui-même d'entrer dans la case lorsqu'il veut administrer un soin à l'animal ou contrôler son état de santé, ou même encore lorsqu'il veut nettoyer la case sans faire sortir l'animal.

L'invention a pour but d'apporter une solution à ce problème en réalisant une case telle qu'elle est décrite ci-dessus qui est caractérisée en ce que lesdits battants ont une largeur telle qu'en position de fermeture, ils n'obstruent qu'une partie de ladite ouverture laissant entre eux un passage suffisamment étroit pour éviter la sortie des animaux mais permettant le passage d'un homme en position debout.

Selon une autre caractéristique de l'invention, l'axe de pivotement de chaque battant est prévu à l'extrémité de la barrière correspondante limitant latéralement ladite case, ledit axe se trouvant dans le plan de l'ouverture, à une distance de la barrière qui est telle que le battant, en position d'ouverture, puisse se trouver contre la barrière à l'intérieur de la case.

Selon une autre caractéristique de l'invention, elle comprend un bras pouvant pivoter autour d'un axe vertical parallèle à l'axe de pivotement du battant, à une certaine distance de celui-ci, l'extrémité libre du bras se verrouillant, lorsque le battant est dans sa position d'ouverture, sur un premier mécanisme de verrouillage solidaire de la barrière portant le battant correspondant de manière que le battant, le bras et la barrière forment, vus de dessus, un triangle dont le bras est un côté, ledit bras se verrouillant sur un second mécanisme de verrouillage solidaire de ladite barrière lorsque ledit battant est dans sa position d'ouverture.

Selon une autre caractéristique de l'invention, lorsque ledit battant est dans sa position d'ouverture, ledit bras se trouve en prolongement du battant contre ladite barrière, à l'intérieur de ladite case.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue de dessus de deux cases contiguës selon l'invention, l'une étant dans sa position de fermeture et l'autre dans sa position d'ouverture, et
la Fig. 2 est une vue de face du système de fermeture de ladite case.

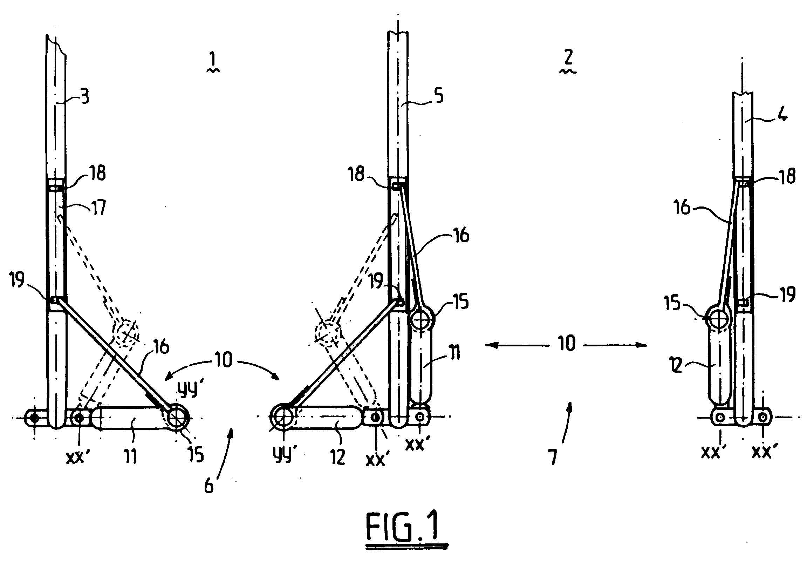

La Fig. 1 représente, vues de dessus, deux cases 1 et 2 selon l'invention côte à côte respectivement délimitées latéralement par des barrières 3 et 4 et séparées entre elles par une barrière commune 5. Chaque case 1 (ou 2) comporte une ouverture 6 (ou 7) qui est délimitée par les extrémités de deux barrières contiguës 3 et 5 (ou 4 et 5) et qui peut être fermée par un système de fermeture 10.

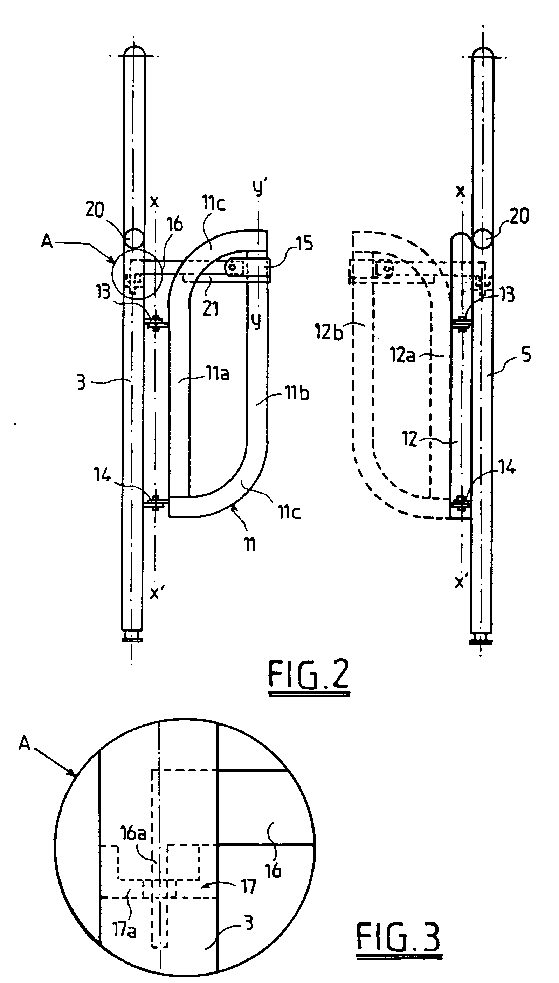

Chaque système de fermeture est constitué de deux battants 11 et 12 pouvant pivoter chacun autour d'un axe vertical xx' (Fig. 2) prévu à l'extrémité de la barrière correspondante 3, 4 ou 5. Chacun des battants 11, 12 peut prendre deux positions: une position d'ouverture où il se trouve à l'intérieur de la case 1 ou 2 contre la barrière 3, 4 ou 5 à laquelle il est fixé et une position de fermeture où il se trouve dans le plan de l'ouverture 6 ou 7.

Les deux battants 11, 12 d'une case sont de largeur telle que, en position de fermeture, ils n'obstruent qu'une partie de l'ouverture 6 ou 7, laissant un passage entre eux deux. Ce passage est suffisamment étroit pour empêcher l'animal dans la case d'en sortir mais il permet le passage d'un homme, ou tout du moins ses jambes. Celui-ci peut donc entrer dans la case, notamment pour les soins de l'animal, le contrôle de son état de santé, etc. Le passage est par exemple d'environ 15 cm pour une ouverture 6 ou 7 de 60 cm.

L'axe de pivotement xx' de chacun des battants 11 ou 12 est par exemple matérialisé par des paumelles 13 et 14 respectivement dans la partie supérieure et dans la partie inférieure de chaque battant 11, 12 (Fig. 2). Vus de dessus, les axes xx' d'un même système de fermeture se trouvent dans le plan de l'ouverture 6 ou 7, à une distance des barrières correspondantes 3, 4, 5 qui est telle que les battants 11, 12, en position d'ouverture, puissent se trouver contre ces barrières (voir, à la Fig. 1, le système de la case 2).

Dans l'exemple de réalisation représenté, chaque battant 11 (ou 12) comprend deux montants tubulaires 11a, 11b (ou 12a et 12b) reliés ensemble par des parties en arc de cercle 11c (ou 12c).

On a prévu une articulation 15 solidaire de l'extrémité d'un bras 16 et montée sur chaque battant 11, 12 de manière que le bras 16 puisse pivoter autour d'un axe yy' vertical parallèle à l'axe de pivotement xx' du battant 11, 12 correspondant, à une certaine distance de celui-ci.

Dans l'exemple de réalisation représentée, l'articulation 15 est constituée d'un collier sur le montant extérieur 11b, 12b du battant 11, 12, montant qui est opposé à celui qui reçoit les paumelles 13, 14.

Sur les barrières 3, 4, 5, on a prévu un profilé en "U" 17 (figs. 1 et 3) dont l'âme 17a, horizontale et parallèle à la longueur des barrières 3, 4, 5, est percée de trous oblongs transversaux 18 et 19. L'extrémité du bras 16 est munie d'une tige verticale 16a qui est prévue pour entrer dans l'un des trous oblongs 18 ou 19 du profilé 17.

Le trou 18 constitue, avec la tige 16a, un premier moyen de verrouillage alors que le trou 19 en constitue un second. Ces mécanismes de verrouillage pourraient être différents dès lors qu'ils remplissent les fonctions de ceux décrits.

Le trou 18 est positionné, par rapport au système de fermeture, de manière que, lorsque le battant 11, 12 se trouve dans sa position de fermeture, vu de dessus, le bras 16, le battant 11, 12 et la barrière 3, 4, 5 forment un triangle dont le bras 16 est un côté, côté qui est l'hypoténuse lorsque ce triangle est rectangle.

Lorsque le battant 11, 12 est dans sa position d'ouverture, on constate que le bras 16 se trouve sensiblement en prolongement du battant 11, 12, c'est-à-dire contre la barrière correspondante. Le trou 19 permet le verrouillage du bras 16 et du battant 11, 12 dans cette position. Les battants 11, 12 et les bras 16, dans leurs positions d'ouverture, s'effacent à l'intérieur de la case et sont ainsi sans danger pour l'entrée ou la sortie des animaux.

Supposons que le système de fermeture est dans sa position d'ouverture comme cela est montré pour la case de droite sur la Fig. 2. En soulevant, le bras 16 de manière que la tige 16a sorte du trou 18, on libère le bras 16. Il est alors possible de fermer le battant 11, 12 correspondant. La tige 16a est guidée dans le profilé en "U" 17 et lorsqu'on atteint la position de fermeture, on positionne la tige 16a dans le trou 19. Là, le bras 16 et le battant 11, 12 correspondant sont immobilisés. Pour ouvrir ce battant 11, 12, on soulève la tige 16a et on la dégage du trou 19. Puis on vient la positionner dans le trou 18.

Sur la Fig. 2, on voit que les profilés en "U" 17 se trouvent sensiblement sous des tubes transversaux 20 des barrières 3, 4, 5. De cette manière, on limite le débattement des bras 16 vers le haut. Ainsi, ils ne peuvent être retirés du profilé 17 sans démontage. Cela constitue un facteur de sécurité.

On a également prévu, solidaire de chaque battant 11, 12, un arceau 21 destiné à supporter le bras 16 correspondant. Cette mesure assure le soutien du bras 16 et évite des coincements indésirables de ce bras.

## Revendications

1. Case pour animaux, tels que des porcs, ladite case comprenant des barrières (3, 4, 5) formant clôture et une ouverture (7), ladite case étant pourvue d'un système de fermeture constitué de deux battants (11, 12) pouvant pivoter respectivement autour d'axes verticaux (xx') de manière à pouvoir prendre, d'une part, une position d'ouverture et, d'autre part, une position de fermeture où ils se trouvent dans le plan de l'ouverture (7) pour l'obstruer, caractérisée en ce que les battants (11, 12) ont une largeur telle qu'en position de fermeture ils n'obstruent qu'une partie de ladite ouverture (7), tout en laissant entre eux un passage suffisamment étroit pour éviter la sortie des animaux mais permettant le passage des jambes d'un homme, ledit système de fermeture étant agencé pour permettre l'entrée d'un homme dans ladite case.

2. Case pour animaux selon la revendication 1, caracterisée en ce que l'axe de pivotement (xx') de chaque battant (11, 12) est prévu à l'extrémité de la barrière (3, 4, 5) correspondante limitant latéralement ladite case, ledit axe (xx') se trouvant dans le plan de l'ouverture (7), à une distance de la barrière qui est telle que le battant (11, 12), en position d'ouverture, puisse se trouver contre la barrière à l'intérieur de la case.

3. Case pour animaux selon la revendication 1 ou 2, caractérisée en ce qu'il comprend un bras (16) pouvant pivoter autour d'un axe vertical (yy') parallèle à l'axe de pivotement (xx') du battant, à une certaine distance de celui-ci, l'extrémité libre du bras (16) se verrouillant, lorsque le battant (11, 12) est dans sa position d'ouverture, sur un premier mécanisme de verrouillage solidaire de la barrière portant le battant (11, 12) correspondant de manière que le battant (11, 12), le bras (16) et la barrière forment, vus de dessus, un triangle dont le bras est un côté, ledit bras se verrouillant sur un second mécanisme de verrouillage solidaire de ladite barrière lorsque ledit battant (11, 12) est dans sa position d'ouverture.

4. Case pour animaux selon la revendication 3, caractérisée en ce que, lorsque ledit battant (11, 12) est dans sa position d'ouverture, ledit bras (16) se trouve sensiblement en prolongement du battant contre ladite barrière, à l'intérieur de la case.

## Claims

1. Pen for animals such as pigs, said pen comprising gates (3,4,5) forming closure and an opening (7), said pen being provided with a closing means made up of two wings (11, 12) which can rotate respectively around vertical axes (xx') in such a way that they can assume, on the one hand, an open position and, on the other hand, a closed position where they are positioned in line with the opening (7) to block it, characterised in that the wings (11, 12) are sufficiently wide that when closed they only block part of said opening (7), at the same time leaving between them a gap which is sufficiently narrow to prevent the exit of the animals yet allowing a person's legs to pass through, said closing means being designed in such a way as to allow a person to enter said pen.

2. Pen for animals as claimed in Claim 1, characterised in that the axis of rotation (xx') of each wing (11, 12) is provided at the extremity of the corresponding gate (3,4,5) laterally defining said pen, said axis (xx') being situated in line with the opening (7), at a distance from the gate which is such that the wing (11, 12), in the open position, can be positioned against the gate inside the pen.

3. Pen for animals as claimed in Claim 1 or 2, characterised in that it comprises an arm (16) which can rotate around a vertical axis (yy') parallel to the axis of rotation (xx') of the wing, at a certain distance from the latter, the free end of the arm (16) locking, when the wing (11, 12) is in the open position, on to an initial locking mechanism integral to the gate carrying the corresponding wing (11, 12) in such a way that the wing (11, 12), the arm (16) and the gate form, viewed from above, a triangle of which the arm is one side, said arm locking on to a second locking mechanism integral to said gate when said wing (11, 12) is in the open position.

4. Pen for animals as claimed in Claim 3, characterised in that when said wing (11, 12) is in the open position, said arm (16) is positioned approximately in line with the wing against said gate inside the pen.

## Patentansprüche

1. Tierkäfig, beispielsweise für Schweine, wobei der Käfig Begrenzungsstreben (3, 4, 5) aufweist, welche eine Umzäunung bilden, sowie eine Öffnung (7) aufweist, wobei der Käfig mit einer Schließanlage versehen ist, welche zwei Klappen (11, 12) umfaßt, welche sich jeweils um vertikale Achsen (xx') derart drehen können, daß sie einerseits eine Öffnungsstellung und andererseits eine Schließstellung einnehmen können, in der sie sich in der Ebene der Öffnung (7) befinden, um dieselbe abzusperren, **dadurch gekennzeichnet**, daß die Klappen (11, 12) eine derartige Breite haben, daß sie in der Schließstellung nur einen Teil der Öffnung (7) absperren und zwischen denselben ein so ausreichend schmaler Durchgang frei bleibt, daß das Austreten der Tiere verhindert wird, aber ein Durchgang für die Beine einer Person vorhanden ist, wobei die Schließanlage betätigbar ist, um den Zutritt einer Person zu dem Käfig zu gestatten.

2. Tierkäfig nach Anspruch 1, **dadurch gekennzeichnet**, daß die Drehachse (xx') jeder Klappe (11, 12) an einem Ende der Begrenzungsstrebe (3, 4, 5) unter Zuordnung zu einer seitlichen Begrenzung des Käfigs vorgesehen ist, und daß die Achse (xx') in der Ebene der Öffnung (7) in einem Abstand von der Begrenzungsstrebe derart liegt, daß sich die Klappe (11, 12) in der Öffnungsstellung unter Anlage gegen die Begrenzungsstrebe im Innern des Käfigs befinden kann.

3. Tierkäfig nach Anspruch 1 oder 2, **dadurch gekennzeichnet**, daß er einen Arm (16) aufweist, welcher sich um eine vertikale Achse (yy') parallel zu einer Drehachse (xx') der Klappe in einem gewissen Abstand zu derselben drehen kann, das freie Ende des Arms (16) in der Öffnungsstellung der Klappe an einer ersten Verriegelungseinrichtung verriegelbar ist, welche fest mit der die Klappe (11, 12) tragenden Begrenzungsstrebe in entsprechender Weise derart verbunden ist, daß die Klappe (11, 12), der Arm (16) und die Begrenzungsstrebe in der Draufsicht ein Dreieck bilden, bei dem der Arm eine Seite bildet, und daß der Arm in der Öffnungsstellung der Klappe (11, 12) an einer zweiten Verriegelungseinrichtung verriegelbar ist, welche fest mit der Begrenzungsstrebe verbunden ist.

4. Tierkäfig nach Anspruch 3, **dadurch gekennzeichnet**, daß in der Öffnungsstellung der Klappe (11, 12) der Arm (16) sich im wesentlichen in Verlängerung zu der Klappe gegenüber der Begrenzungsstrebe im Innern des Käfigs befindet.
